(19) Europäisches Patentamt

European Patent Office

Office européen des brevets

(11) **EP 1 016 678 B1**

(12) **FASCICULE DE BREVET EUROPEEN**

(45) Date de publication et mention
de la délivrance du brevet:
**27.07.2005 Bulletin 2005/30**

(51) Int Cl.⁷: **C08F 14/06**, C08F 259/04

(21) Numéro de dépôt: **99403252.2**

(22) Date de dépôt: **22.12.1999**

(54) **Polymères à base de chlorure de vinyle, aptes à donner des plastisols de propriétés particulières et leur procédé d'obtention**

Vinylchloridpolymere, geeignet um Plastisole mit besonderen Eigenschaften zu ergeben und dessen Herstellungsverfahren

Polymers of vinyl chloride, able to give plastisols with specific properties and their production process

(84) Etats contractants désignés:
**AT BE CH CY DE DK ES FI FR GB GR IE IT LI LU MC NL PT SE**

(30) Priorité: **29.12.1998 FR 9816527**

(43) Date de publication de la demande:
**05.07.2000 Bulletin 2000/27**

(73) Titulaire: **ARKEMA**
**92800 Puteaux (FR)**

(72) Inventeurs:
• **Bonardi, Christian**
**69230 Saint Genis-Laval (FR)**
• **Chippaux, André**
**69008 Lyon (FR)**
• **Bonnaud, Bernard**
**04200 Sisteron (FR)**
• **Perès, Richard**
**04600 Saint Auban sur Durance (FR)**

(74) Mandataire: **Dang, Doris et al**
**ARKEMA**
**Département Propriété Industrielle**
**4-8, cours Michelet,**
**La Défense 10**
**92091 Paris La Défense Cedex (FR)**

(56) Documents cités:
**EP-A- 0 826 702**          **US-A- 5 290 890**

**Description**

La présente invention concerne un procédé d'obtention de polymères à base de chlorure de vinyle, aptes à donner des plastisols de propriétés particulières. Plus particulièrement, elle a pour objet un procédé de polymérisation en microsuspension ensemencée du chlorure de vinyle et éventuellement d'un ou plusieurs monomères copolymérisables.

Il est connu d'utiliser des plastisols, préparés à partir des polymères à base de chlorure de vinyle, dans la fabrication de divers articles tels que les revêtements de sol et mur, les tissus enduits plastifiés et des mastics.

Devant la rude concurrence, de nombreuses études ont été menées soit pour tenter de trouver de nouvelles applications pour ces plastisols soit pour améliorer leurs propriétés.

Ont également fait l'objet de nombreux travaux, les procédés de fabrication de polymères à base de chlorure de vinyle, susceptibles de donner des plastisols de propriétés particulières, ouvrant ainsi la voie à de nouvelles applications.

La demande de brevet japonais JP 62-231594 divulgue un procédé de fabrication de polymères à base de chlorure de vinyle, aptes à donner des plastisols de faible viscosité, bonne stabilité thermique et bonne résistance à l'absorption d'eau. L'élément essentiel de ce procédé réside dans la présence d'hydrotalcite, introduite dans le milieu réactionnel avant ou pendant la phase initiale de polymérisation du chlorure de vinyle.

Par ailleurs, un procédé de préparation de polymères de chlorure de vinyle capable de donner des plastisols ayant une faible viscosité initiale, une stabilité de la viscosité au cours du stockage, et de bonnes propriétés de dégazage a été décrit dans le brevet français FR 2163573. Ce document nous enseigne d'opérer en milieu aqueux sous l'action d'initiateurs organosolubles et d'agents réducteurs hydrosolubles, en présence de sels de métal alcalin d'acides gras supérieurs contenant de 8 à 18 atomes de carbone et d'au moins un élément choisi dans le groupe (A) formé d'alcools supérieurs et d'acides gras supérieurs ayant de 8 à 18 atomes de carbone.

L'exemple comparatif 5 du document FR 2163573 montre qu'une polymérisation du chlorure de vinyle effectuée en l'absence d'un élément du groupe (A) conduit à des plastisols très visqueux qui ont une mauvaise aptitude au dégazage et une mauvaise transparence. Le document EP0826702 divulgue un procédé d'obtention de latex à des populations de particules, à base de polychlorure de vinyle par polymérisation en microsuspension, en présence d'eau, d'un émulsifiant anionique, d'un sel métallique soluble et d'un agent réducteur. Parmi les émulsifiants anioniques préférés sont cités les savons d'acide gras mais pas les sels d'ammonium d'acide gras.

Mis à part les documents précités, on ne trouve pas dans la littérature des procédés d'obtention de plastisols présentant un ensemble de propriétés convenables, étant donné la difficulté d'améliorer simultanément deux ou plusieurs de leurs propriétés. Ainsi, la résistance à l'absorption d'eau se voit souvent sacrifiée au profit de la stabilité thermique ou encore une bonne aptitude au dégazage aux dépens de la viscosité.

Un but de la présente invention est de fournir des plastisols ayant une bonne aptitude au débullage ou des plastisols ne renfermant pas de bulle d'air après le malaxage, tout en conservant ou améliorant au moins l'une des propriétés suivantes : la stabilité thermique, la résistance à la coloration, la stabilité aux U.V., la transparence, la rhéologie et l'hydrophobie. Les plastisols particulièrement visés sont ceux présentant une bonne aptitude au débullage et une bonne stabilité thermique, ceux présentant une bonne aptitude au débullage et une hydrophobie correcte et ceux présentant une bonne aptitude au débullage, une bonne stabilité thermique et une hydrophobie correcte.

Ce but est atteint, suivant la présente invention, par un procédé de polymérisation en microsuspension ensemencée du chlorure de vinyle et éventuellement d'un ou plusieurs comonomère(s) polymérisable(s) en milieu aqueux sous l'action d'au moins un initiateur organosoluble, d'au moins un agent réducteur choisi dans le groupe (S) formé par les sulfoxylates, sulfites et métabisulfites de métal alcalin, d'au moins un sel métallique hydrosoluble choisi dans le groupe (M) constitué de sels de fer, cuivre, cobalt, nickel, zinc, titane, vanadium, manganèse, chrome, cérium, d'étain et d'argent, en présence d'au moins un sel d'ammonium d'acide gras contenant de 12 à 22 atomes de carbone.

La présente invention a pour premier objet un procédé d'obtention de latex, contenant des particules de polymères à base de chlorure de vinyle, qui consiste à polymériser en microsuspension le ou les monomère(s) correspondant(s) en présence d'eau, d'au moins un sel métallique hydrosoluble choisi dans le groupe (M), d'au moins un sel d'ammonium d'acide gras contenant de 12 à 22 atomes de carbone, d'au moins un agent réducteur choisi dans le groupe (S), d'au moins un polymère d'ensemencement (P1) dont les particules renferment au moins un initiateur organosoluble et éventuellement d'au moins un polymère d'ensemencement (P2).

Par polymérisation en microsuspension, on entend une polymérisation, en présence d'initiateurs organosolubles, d'au moins un monomère dispersé par des moyens mécaniques énergiques dans un milieu aqueux contenant un émulsifiant en tant que stabilisant, afin d'obtenir une dispersion de particules dont le diamètre moyen est inférieur à 5 µm.

Par polymères à base de chlorure de vinyle, on entend les homopolymères et les copolymères, ces derniers contenant au moins 50 % en poids de chlorure de vinyle et au moins un monomère copolymérisable avec le chlorure de vinyle. Les monomères copolymérisables sont ceux généralement employés dans les techniques classiques de copolymérisation du chlorure de vinyle. On peut citer les esters vinyliques des acides mono- et polycarboxyliques, tels que acétate, propionate, benzoate de vinyle ; les acides insaturés mono- et polycarboxyliques, tels que acrylique, méthacrylique, maléique, fumarique, itaconique, ainsi que leurs esters aliphatiques, cyclo-aliphatiques, aromatiques, leurs amides, leurs nitriles ; les halogénures de vinyle, de vinylidène ; les alkylvinyl-éthers ; les oléfines.

Préparation du polymère d'ensemencement (P1)

Le polymère d'ensemencement (P1) nécessaire à la polymérisation, suivant l'invention, est préparé selon les techniques classiques de polymérisation en microsuspension. Il se présente sous forme d'une dispersion de particules de polymère dont le diamètre moyen est compris entre 0,2 et 2 μm et de préférence entre 0,3 et 1 μm.

Un moyen de préparer le polymère (P1) consiste à mettre en oeuvre de l'eau, du chlorure de vinyle seul ou associé avec un ou plusieurs monomère(s) copolymérisable(s), un initiateur organosoluble et un émulsifiant anionique éventuellement associé à un émulsifiant non ionique. Le ou les monomères sont finement dispersés dans l'eau à l'aide d'un moyen mécanique énergique tel que, par exemple, moulin à colloïdes, pompe rapide, agitateur à vibrations, appareil à ultrasons, mélangeur-disperseur à haute pression. La microsuspension obtenue est alors chauffée sous pression autogène et sous agitation modérée à une température généralement comprise entre 30 et 65°C. Après la chute de la pression, la réaction est arrêtée et le ou le monomères non transformés sont dégazés.

Les initiateurs organosolubles, à mettre en oeuvre dans la préparation du polymère (P1), sont représentés par les peroxydes organiques, tels que les peroxydes de diacyle (par exemple les peroxydes de lauroyle, de décanoyle ou de caproyle), le diéthylperacétate de tertiobutyle, le percarbonate de dicétylhexyle, le peroxyde de diacétyle, et le dicétylperoxyde carbonate. Les initiateurs préférés sont ceux qui sont également insolubles dans l'eau.

L'initiateur organosoluble est choisi de manière à ce que sa mise en jeu, en quantité raisonnable, permet d'obtenir des polymères (P1) renfermant entre 1 et 10 % en poids de cet initiateur pour une durée de préparation comprise entre 4 et 16 heures.

La teneur massique d'initiateur organosoluble présent dans les particules du polymère (P1) est avantageusement comprise entre 1 et 4 %.

L'initiateur organosoluble préféré est le peroxyde de lauroyle.

Préparation du polymère d'ensemencement (P2)

L'éventuel polymère d'ensemencement (P2) se présente sous forme d'une dispersion de particules de polymère à base de chlorure de vinyle, dont le diamètre moyen est compris entre 0,05 et 0,5 μm et de préférence entre 0,08 et 0,2 μm.

Cette dispersion de particules peut être obtenue par les techniques classiques de polymérisation en émulsion.

Un moyen de préparer le polymère (P2) consiste à mettre en oeuvre de l'eau, du chlorure de vinyle seul ou associé à un monomère copolymérisable, un initiateur hydrosoluble et un émulsifiant anionique éventuellement associé à un émulsifiant non ionique.

Le mélange réactionnel est chauffé sous pression autogène et agitation modérée à une température comprise entre 30 et 65°C. Après la chute de pression, la réaction est arrêtée et le ou les monomères non transformés sont dégazés.

Les initiateurs hydrosolubles nécessaires à la préparation du polymère (P2) sont généralement représentés par l'eau oxygénée, les persulfates de métaux alcalins ou d'ammonium associés ou non à des réducteurs hydrosolubles, tels que sulfites ou bisulfites de métaux alcalins. Les quantités utilisées, très variables, dépendent du système initiateur choisi et sont ajustées pour assurer la polymérisation dans des temps compris entre 4 et 12 heures.

Préparation du latex

Dans le procédé selon l'invention, la quantité d'agent réducteur engagée est inférieure à 0,1 % en poids et, de préférence, comprise entre 30 et 200 ppm par rapport au(x) monomère(s), mis en jeu.

L'agent réducteur avantageusement choisi est le métabisulfite de sodium ou de potassium.

D'une manière générale, l'agent réducteur est utilisé sous forme d'une solution aqueuse de concentration comprise entre 1 et 100 g/l. Une concentration comprise entre 1 et 20 g/l est préférée.

De préférence, on commence l'introduction de cette solution aqueuse dans le milieu réactionnel avant que la température de celui-ci atteigne la température de polymérisation visée, et on continue pendant la polymérisation avec un débit qui peut être ajusté en fonction de la capacité de refroidissement du réacteur.

Le ou les agent(s) réducteur(s) choisi(s) dans le groupe (S) peut ou peuvent être utilisé(s) conjointement avec les agents réducteurs classiques c'est-à-dire ceux habituellement utilisés en microsuspension comme notamment les acides alkylphosphoriques, les lactones, les cétones, les carbazones, les acides mono- ou polycarboxyliques, notamment l'acide ascorbique, et leurs dérivés.

Parmi les agents réducteurs classiques, l'acide ascorbique est avantageusement choisi.

Suivant la présente invention, la quantité de sel d'ammonium d'acide gras mise en oeuvre est en général comprise entre 0,3 et 3 % et de préférence entre 0,5 et 1,5 % en poids par rapport au(x) monomère(s) mis en jeu.

La chaîne carbonée de l'acide gras peut être linéaire ou ramifiée. Elle peut être saturée ou peut comprendre une ou plusieurs liaison(s) insaturée(s). Elle peut également comprendre une ou plusieurs fonction(s) hydroxyle(s) ou époxydes.

Les sels d'ammonium d'acide gras sont ceux contenant de 12 à 22 atomes de carbone comme, par exemple, les sels d'acide laurique, d'acide myristique, d'acide palmitique ou d'acide stéarique.

Les sels d'acide(s) gras peuvent être mis en oeuvre sous forme solide, en suspension ou en solution. Toutefois on préfère les utiliser en solution aqueuse, même lorsque cette mise en solution nécessite une température supérieure à l'ambiante.

Suivant la présente invention, les sels d'ammonium d'acide gras peuvent être introduits dans le milieu réactionnel avant et/ou pendant et/ou après la polymérisation. Ces sels d'acide gras sont avantageusement introduits pendant la polymérisation.

Les sels d'acide gras peuvent être formés in-situ, en introduisant d'abord l'acide gras dans le milieu réactionnel et en injectant au cours de la polymérisation une base jusqu'à neutralisation totale de l'acide gras.

Dans le procédé de l'invention, le sel métallique hydrosoluble choisi du groupe (M) est mis en oeuvre en quantité telle que le rapport massique sel métallique/monomère(s) mis en jeu est compris entre 0,01 et 100 ppm, de préférence compris entre 0,05 et 10 ppm et avantageusement compris entre 0,1 et 5 ppm. Les sels hydrosolubles de cuivre sont particulièrement préférés.

Le sel métallique hydrosoluble peut être introduit avant ou/et pendant la polymérisation. De préférence on l'introduit avant la polymérisation.

La quantité totale de polymères (P1) à mettre en oeuvre est comprise entre 0,5 et 10 % en poids et de préférence entre 1 et 5 % en poids par rapport au(x) monomère(s) mis en jeu.

Lorsqu'on opère en présence d'au moins un polymère (P2), la quantité totale de polymères (P2) à mettre en oeuvre est comprise entre 0,1 et 10 % en poids et, de préférence, entre 0,5 et 5 % en poids par rapport au(x) monomère (s) mis en jeu.

Dans une forme préférée de l'invention, on met en oeuvre à la fois un polymère (P1) et un polymère (P2), les particules de (P2) ayant un diamètre moyen inférieur à celui des particules de (P1).

La quantité d'eau nécessaire au procédé selon l'invention doit être telle que la concentration initiale en polymères d'ensemencement plus le(s) monomère(s) mis en jeu soit comprise entre 20 et 80 % et de préférence entre 45 et 75 % en poids par rapport au mélange réactionnel.

Bien qu'il ne soit pas nécessaire, on peut ajouter, dans le milieu réactionnel, avant et/ou en cours de et/ou après la polymérisation au moins un émulsifiant anionique choisi de préférence dans le groupe représenté par les alkylsulfates, les alkylsulfonates, les vinylsulfonates, les allylsulfonates, les alkylsulfosuccinates et les alkylphosphates alcalins.

Selon l'invention, le milieu réactionnel est chauffé sous pression autogène à une température généralement comprise entre 35 et 70°C et de préférence entre 45 et 60°C.

Les polymères à base de chlorure de vinyle préparés par le procédé de l'invention sont séparés du milieu de polymérisation par tous moyens connus, tels que filtration, coagulation-essorage, écaillage, décantation centrifuge et séchage. La séparation est de préférence effectuée par séchage et les polymères à base de chlorure de vinyle sont avantageusement séchés par atomisation.

Un second objet de l'invention est le polymère à base de chlorure de vinyle ainsi obtenu, apte à la préparation de plastisols ayant des propriétés particulières.

Un troisième objet de l'invention vise la préparation de ces plastisols par mélange du polymère à base de chlorure de vinyle, ainsi obtenu, avec un plastifiant. L'invention vise également les plastisols ainsi préparés.

**PARTIE EXPERIMENTALE**

I - Préparation du polymère d'ensemencement (P1)

Dans un réacteur agité à 35 tours/min. et régulé à 15°C, on introduit en poids successivement :

- 120 parties d'eau,
- 0,14 partie de phosphate monopotassique,
- 0,02 partie de soude,
- $3,4 \times 10^{-3}$ parties de paraquinone en poudre,

- 1,88 parties de peroxyde de lauroyle,
- 100 parties de chlorure de vinyle,
- et 1,5 parties ramenée au dodécylbenzène sulfonate de sodium d'une solution aqueuse à 10 %,

le réacteur étant mis sous vide juste avant l'introduction du chlorure de vinyle.

On réalise ensuite une fine dispersion du chlorure de vinyle dans le milieu aqueux à une température inférieure ou égale à 35°C, en agitant ledit milieu, pendant 105 minutes, à 5 500 tours/min. Puis on porte le milieu réactionnel à la température de polymérisation visée de 45°C sous pression autogène, en agitant avec une vitesse de 30 tours/min. On introduit alors en continu la paraquinone avec un débit constant de 0,033 parties en poids/h.

Après la chute de pression jusqu'à la valeur de 3,5 bars, on dégaze le chlorure de vinyle qui n'a pas réagi.

II - Préparation du polymère d'ensemencement (P2)

Dans un réacteur muni d'un agitateur on introduit en poids :

- 138 parties d'eau,
- une solution aqueuse contenant 0,5 partie d'acide laurique et 0,15 partie de soude.

Le réacteur est ensuite mis sous vide avant l'introduction de 100 parties de chlorure de vinyle. Puis on porte le milieu réactionnel à la température visée de 58°C.

Dès que le milieu atteint 45°C, on introduit en continu une solution aqueuse contenant 0,05 partie de persulfate de potassium pour 14 parties d'eau. Deux heures après le début d'introduction de celle-ci, on ajoute en continu à débit constant pendant 8 heures une solution aqueuse contenant 1,3 parties de dodécylbenzène sulfonate de sodium.

Lorsque la pression interne est de 4 bars, le chlorure de vinyle non réagi est récupéré sous vide, ensuite le réacteur est remis à l'air puis refroidi.

Exemple 1

Dans un réacteur de 800 litres, muni d'un agitateur et préalablement mis sous vide, on introduit successivement par aspiration :

- 430 kg d'eau déminéralisée
- 80 g de phosphate monopotassique ($KH_2PO_4$) et 0,63 g de sulfate de cuivre ($CuSO_4\ 5H_2O$) préalablement dissous dans 1 litre d'eau.
- 16 kg considérés à l'état sec du latex de polymère d'ensemencement (P1) dont les particules de diamètre moyen voisin de 0,55 μm renfermant 2 % en poids de peroxyde de lauroyle par rapport au polymère,
- 6 kg considérés à l'état sec du latex de polymère d'ensemencement (P2) dont les particules ont un diamètre moyen de 0,13 μm.

On agite le milieu réactionnel à température ambiante à environ 80 tours/min., puis on met de nouveau le réacteur sous vide pendant environ 30 minutes. On introduit ensuite 400 kg de chlorure de vinyle ; et on porte alors le milieu réactionnel à la température visée de 54°C. Dès que la température du milieu atteint 49°C, on introduit en continu une solution aqueuse de métabisulfite de potassium. Une heure après que la température du milieu a atteint 49°C, on introduit une solution aqueuse de myristate d'ammonium préalablement préparée à partir de l'acide myristique et d'ammonium, maintenue à une température de 45°C.

Lorsque la pression du milieu est de 4 bars, soit après 8 heures de polymérisation, on arrête l'introduction des solutions aqueuses et on refroidit le réacteur.

La quantité totale de métabisulfite de potassium et de myristate d'ammonium sont de 14 g et 3,2 kg respectivement.

La concentration en polymères dans le latex est de 44,6 %.

Les particules de polymères sont ensuite récupérées dans une installation de séchage par atomisation, suivi d'une étape de broyage.

On prépare ensuite le plastisol en mélangeant 100 parties en poids de la poudre issue de l'atomisation, avec 40 parties du di(ethyl-2-hexyl)phtalate et 2 parties de stabilisant, (sel d'étain, calcium, zinc).

L'hydrophobie, l'aptitude au débullage et la stabilité thermique indiquées dans les Tableaux 1 et 2 sont mesurées comme décrit ci-dessous :

Hydrophobie

En mesurant les angles de contact d'une goutte d'eau déposée sur un plastisol enduit et gélifié, on peut déterminer le pouvoir hydrophobe de celui-ci. En effet, l'angle intérieur que fait la tangente de la goutte liquide avec l'enduit au point de contact peut être relié à la tension de surface critique de l'enduit par l'équation de Zisman :

$$\text{Cos } \theta = 1 - M(\gamma_L - \gamma_C)$$

ou

θ représente l'angle de contact
M est constante
$\gamma_L$ représente la tension de surface critique du liquide
$\gamma_C$ représente la tension de surface critique de l'enduit.

Lorsqu'on utilise l'eau de référence, $\gamma_L$ vaut 70,6 mN/m.
De manière concrète pour diminuer l'hydrophobie, il faut augmenter l'angle de contact.
On effectue la mesure à l'aide d'une caméra Sony Color Video Camera CCD-Iris, munie d'un zoom 18-108 mm, légèrement inclinée pour permettre la mise au point sur les zones de contact eau-enduit.
On laisse perler une goutte d'eau calibrée de 5 µl au bout de l'aiguille d'une seringue 25 µl, puis on l'approche de l'enduit. Lorsqu'il y a contact, la goutte se détache naturellement. Elle est éclairée à l'aide d'un système Leica CLS 100 utilisant une seule des deux sources orientables, placée en vis-à-vis de l'objectif. Cette disposition permet une prise de vue en contre-jour, dont l'intensité peut être modifiée avec le diaphragme de l'objectif. Le contre-jour donne une bonne définition du contour de la goutte.
On prend la photo une minute après le dépôt de la goutte, au moyen d'un moniteur Sony Trinitron Super Fine Pitch et de l'imprimante Sony Color Video Printer UP-3000 P.
La valeur indiquée dans le Tableau 1 est la moyenne des angles, gauche et droite, mesurés.

Aptitude au débullage

On détermine la densité du plastisol avant débullage, en pesant un bêcher de volume connu vide puis rempli au ras de bord avec le plastisol.
Le plastisol est ensuite placé dans un multidébulleur, équipé d'un vibreur, fonctionnant selon le principe suivant :
Lors de la mise sous vide du multidébulleur, et sous l'action du vibreur le plastisol renfermant des bulles d'air se dilate et son niveau s'élève un peu, puis en ramenant la pression dans le multidébulleur à pression normale, le plastisol dilaté redescend jusqu'à son niveau initial. On répète cette opération toutes les 5 minutes et on mesure la densité du plastisol après chaque opération. On considère les bulles gazeuses complètement éliminées lorsque la densité du plastisol n'évolue plus après 2 opérations successives.
Un plastisol présente une bonne aptitude au débullage lorsque soit sa densité initiale est élevée soit l'augmentation de sa densité par opération est élevée.

Stabilité thermique

On enduit le plastisol, préalablement débarrassé des bulles d'air, sur du papier siliconé et on règle la hauteur sous râcle de façon à avoir une enduction gélifiée à 0,9 mm d'épaisseur après 3 et 10 minutes à 200°C dans un four. On mesure ensuite l'indice de jaunissement YI à l'aide d'un colorimètre HUNTERLAB.

Exemple 2

On opère comme précédemment sauf que la quantité de polymère d'ensemencement (P2) est réduite à 4 kg et la quantité totale de myristate d'ammonium introduite est de 4,8 kg.

Exemple 3

On opère comme à l'exemple 1 sauf que la quantité de polymère d'ensemencement (P2) est réduite à 4 kg et que l'on introduit en plus une solution aqueuse contenant 4 kg de dodécylbenzène sulfonate de sodium.

Exemple 4 comparatif

On opère comme à l'exemple 1 sauf que la quantité de polymère d'ensemencement (P2) est de 16 kg, le myristate d'ammonium est remplacé par le dodécylbenzène sulfonate de sodium et le métabisulfite est remplacé par 38 g d'acide ascorbique.
La durée de polymérisation est de 6 heures et demi et la concentration en polymères dans le latex est de 47,9 %.

Exemple 5 comparatif

On opère comme à l'exemple 4 sauf que la quantité de polymère d'ensemencement (P2) est de 14 kg, la quantité d'acide ascorbique et de sulfate de cuivre sont de 28 g et 0,42 g respectivement.
La durée de polymérisation est de 5 heures et la concentration en polymères dans le latex est de 47,5 %.
Les caractéristiques du plastisol préparé à partir de polymères ainsi obtenus sont sensiblement les mêmes que celles de l'exemple 4.

Exemple 6 comparatif

On opère comme à l'exemple 5 sauf que le dodécylbenzène sulfonate est remplacé par le myristate d'ammonium.
La réaction est très lente, et la concentration en polymères dans le latex final n'est que de 36,3 %.
Les polymères obtenus n'ont pas été évalués en application.

Exemple 7

On opère comme à l'exemple 1 sauf que la quantité de polymère (P2) est de 14 kg.

Exemple 8

On opère comme à l'exemple 1 sauf que le myristate d'ammonium est remplacé par le laurate d'ammonium.

Exemple 9

Cet exemple diffère de l'exemple 8 par l'utilisation du palmitate d'ammonium à la place du laurate.

Exemple 10

On opère comme à l'exemple 9 sauf que l'on utilise du stéarate d'ammonium.

Exemple 11

Par rapport à l'exemple 1, on utilise un mélange de sels d'acide gras commercial référencé Disponil OXS 970 en gardant le même rapport sels d'acide gras/monomère mis en jeu.

Exemple 12

On reproduit l'exemple 1 en utilisant le produit commercial Cecavon AM 230 contenant principalement un mélange de sel d'ammonium d'acide gras ayant des chaînes stéariques et palmitiques saturées à la place du myristate d'ammonium tout en conservant le même rapport sel d'acide gras/monomère.

Exemple 13 comparatif

On reprend l'exemple 1 à ceci près que la polymérisation est effectuée en l'absence de sel de cuivre.
Après 15 heures de réaction, la concentration en polymères dans le latex n'est que de 36 %.
Les polymères obtenus n'ont pas été évalués en application car la polymérisation en l'absence de sel de cuivre est trop lente pour être utilisée industriellement.

## EP 1 016 678 B1

TABLEAU 1

| EXEMPLES | 1 | 2 | 3 | 4* |
|---|---|---|---|---|
| Stabilité thermique (YI) Ca/Zn à 3' | 6,3 | 7,4 | 7,1 | 7,1 |
| Stabilité thermique (YI) Ca/Zn à 10' | 18,1 | 20,6 | 14,2 | 50 |
| Stabilité thermique (YI) Sn à 3' | 3,2 | 3,9 | 4,2 | 6,6 |
| Stabilité thermique (YI) Sn à 10' | 10,1 | 14 | 11,4 | 14 |
| Angle de contact (degré) | 73 | 72 | 64 | 5 |
| Densité avant débullage | 1,15 | 1,15 | 1,19 | 0,98 |
| Densité après 10 minutes de débullage | 1,20 | 1,23 | 1,24 | 1,00 |

\* = exemple comparatif

TABLEAU 2

| EXEMPLES | 7 | 8 | 9 | 10 | 11 | 12 |
|---|---|---|---|---|---|---|
| Stabilité thermique (YI) Sn à 3' | 3,8 | 3,9 | 4,3 | 4,5 | 5,4 | 4,8 |
| Densité avant débullage | 1,15 | 1,16 | 1,19 | 1,14 | 1,19 | 1,17 |
| Densité après 10 minutes de débullage | 1,23 | 1,20 | 1,22 | 1,20 | 1,23 | 1,20 |

**Revendications**

1. Procédé d'obtention de latex contenant des particules de polymères à base de chlorure de vinyle par polymérisation en microsuspension du ou des monomère(s) correspondant(s) en présence d'eau, d'un ou plusieurs sel(s) métallique(s) hydrosoluble(s) choisi dans le groupe (M), constitué de sels de fer, cuivre, cobalt, nickel, zinc, titane, vanadium, manganèse, chrome, cérium, étain et argent, d'au moins un polymère d'ensemencement (P1) dont les particules renferment au moins un initiateur organosoluble et éventuellement d'au moins un polymère d'ensemencement (P2), **caractérisé en ce que** la polymérisation est réalisée aussi en présence d'un ou plusieurs sel(s) d'ammonium d'acide gras contenant de 12 à 22 atomes de carbone et d'au moins un agent réducteur choisi dans le groupe (S) formé des sulfoxylates, sulfites et métabisulfites de métal alcalin.

2. Procédé selon la revendication 1, **caractérisé en ce que** le rapport massique sel métallique hydrosoluble/monomère(s) mis en jeu est compris entre 0,01 et 100 ppm.

3. Procédé selon l'une des revendications 1 à 2, **caractérisé en ce que** le sel métallique hydrosoluble est un sel de cuivre.

4. Procédé selon l'une des revendications 1 à 3,**caractérisé en ce que** la quantité de sel d'ammonium d'acide gras mise en oeuvre est comprise entre 0,3 et 3 % en poids par rapport au(x) monomère(s) mis en jeu.

5. Procédé selon l'une des revendications 1 à 4, **caractérisé en ce que** l'agent réducteur choisi dans le groupe (S) est un sulfite ou métabisulfite de métal alcalin.

6. Procédé selon l'une des revendications 1 à 5, **caractérisé en ce que** l'agent réducteur peut être utilisé conjointement avec les agents réducteurs classiques.

7. Procédé d'obtention de polymères à base de chlorure de vinyle, **caractérisé en ce que** l'on sèche le latex obtenu selon l'une des revendications 1 à 6.

8. Procédé d'obtention de plastisols à base de chlorure de vinyle, **caractérisé en ce que** l'on mélange les polymères obtenus selon la revendication 7 avec un plastifiant.

8

**9.** Polymères à base de chlorure de vinyle susceptibles d'être obtenus selon la revendication 7.

**10.** Plastisols à base de chlorure de vinyle susceptibles d'être obtenus selon la revendication 8.

**Patentansprüche**

**1.** Verfahren zur Herstellung von Latex, der Teilchen von Polymeren auf Basis von Vinylchlorid enthält, durch Mikrosuspensionspolymerisation des entsprechenden Monomers bzw. der entsprechenden Monomere in Gegenwart von Wasser, einem oder mehreren wasserlöslichen Metallsalzen aus der Gruppe (M), die aus Eisen-, Kupfer-, Cobalt-, Nickel-, Zink-, Titan-, Vanadium-, Mangan-, Chrom-, Cer-, Zinn-und Silbersalzen besteht, mindestens eines Saatpolymers (P1), dessen Teilchen mindestens einen in organischen Lösungsmitteln löslichen Initiator enthalten, und gegebenenfalls mindestens eines Saatpolymers (P2), **dadurch gekennzeichnet, daß** man die Polymerisation außerdem in Gegenwart eines oder mehrerer Fettsäure-Ammoniumsalze mit 12 bis 22 Kohlenstoffatomen und mindestens eines Reduktionsmittels aus der Gruppe (S) von Alkalimetall-sulfoxylaten, -sulfiten und -metabisulfiten durchführt.

**2.** Verfahren nach Anspruch 1, **dadurch gekennzeichnet, daß** das Massenverhältnis von wasserlöslichem Metallsalz zu eingesetztem Monomer bzw. eingesetzten Monomeren zwischen 0,01 und 100 ppm liegt.

**3.** Verfahren nach Anspruch 1 oder 2, **dadurch gekennzeichnet, daß** es sich bei dem wasserlöslichen Metallsalz um ein Kupfersalz handelt.

**4.** Verfahren nach einem der Ansprüche 1 bis 3, **dadurch gekennzeichnet, daß** man das Fettsäure-Ammoniumsalz in einer Menge zwischen 0,3 und 3 Gew.-%, bezogen auf das eingesetzte Monomer bzw. die eingesetzten Monomere, einsetzt.

**5.** Verfahren nach einem der Ansprüche 1 bis 4, **dadurch gekennzeichnet, daß** es sich bei dem Reduktionsmittel aus der Gruppe (S) um ein Alkalimetall-sulfit oder -metabisulfit handelt.

**6.** Verfahren nach einem der Ansprüche 1 bis 5, **dadurch gekennzeichnet, daß** das Reduktionsmittel zusammen mit herkömmlichen Reduktionsmitteln verwendet werden kann.

**7.** Verfahren zur Herstellung von Polymeren auf Basis von Vinylchlorid, **dadurch gekennzeichnet, daß** man den nach einem der Ansprüche 1 bis 6 erhaltenen Latex trocknet.

**8.** Verfahren zur Herstellung von Plastisolen auf Basis von Vinylchlorid, **dadurch gekennzeichnet, daß** man die nach Anspruch 7 erhaltenen Polymere mit einem Weichmacher vermischt.

**9.** Polymere auf Basis von Vinylchlorid, die gemäß Anspruch 7 erhältlich sind.

**10.** Plastisole auf Basis von Vinylchlorid, die gemäß Anspruch 8 erhältlich sind.

**Claims**

**1.** Process for obtaining latex containing polymer particles based on vinyl chloride, by polymerizing the corresponding monomer(s) in microsuspension in the presence of water, one or more water-soluble metal salts selected from the group (M), consisting of iron, copper, cobalt, nickel, zinc, titanium, vanadium, manganese, chromium, cerium, tin and silver salts, at least one seed polymer (P1) whose particles contain at least one organosoluble initiator and, if desired, at least one seed polymer (P2), **characterized in that** polymerization is carried out also in the presence of one or more ammonium salts of a fatty acid containing 12 to 22 carbon atoms and of at least one reducing agent selected from the group (S) formed from alkali metal sulphoxylates, sulphites and metabisulphites.

**2.** Process according to Claim 1, **characterized in that** the ratio by mass of water-soluble metal salt to monomer(s) deployed is between 0.01 and 100 ppm.

**3.** Process according to either of Claims 1 and 2, **characterized in that** the water-soluble metal salt is a copper salt.

4.  Process according to one of Claims 1 to 3, **characterized in that** the amount of fatty acid ammonium salt employed is between 0.3 and 3% by weight relative to the monomer(s) deployed.

5.  Process according to one of Claims 1 to 4, **characterized in that** the reducing agent selected from the group (S) is an alkali metal sulphite or metabisulphite.

6.  Process according to one of Claims 1 to 5, **characterized in that** the reducing agent can be used conjointly with conventional reducing agents.

7.  Process for obtaining polymers based on vinyl chloride, **characterized in that** the latex obtained according to one of Claims 1 to 6 is dried.

8.  Process for obtaining plastisols based on vinyl chloride, **characterized in that** the polymers according to Claim 7 are mixed with a plasticizer.

9.  Polymers based on vinyl chloride, obtainable according to Claim 7.

10. Plastisols based on vinyl chloride, obtainable according to Claim 8.